# EUROPÄISCHE PATENTSCHRIFT

(11) **EP 4 423 457 B1**
(45) Veröffentlichungstag und Bekanntmachung des Hinweises auf die Patenterteilung: **03.12.2025**
(21) Anmeldenummer: 22809402.5
(22) Anmeldetag: 26.10.2022
(51) Int. Cl.: G01C 21/02, B64G 1/36

(54) **VERFAHREN, VORRICHTUNG UND COMPUTERPROGRAMM ZUR LAGEBESTIMMUNG VON SATELLITEN MITTELS STERNSENSOR**
METHOD, DEVICE AND COMPUTER PROGRAM FOR DETERMINING THE POSITION OF A SATELLITE BY MEANS OF A STAR TRACKER
PROCÉDÉ, DISPOSITIF ET PROGRAMME INFORMATIQUE POUR DÉTERMINER LA POSITION DE SATELLITES AU MOYEN D'UN CAPTEUR STELLAIRE

(30) Priorität: 26.10.2021 DE 102021127891; 11.08.2022 DE 102022120279
(43) Veröffentlichungstag der Anmeldung: 04.09.2024
(73) Patentinhaber: Jena Optronik GmbH, 07745 Jena (DE)
(72) Erfinder: SCHMIDT, Uwe, 07616 Bürgel (DE)
(74) Vertreter: Ege Lee & Roider Patentanwälte
(86) Internationale Anmeldenummer: PCT/EP2022/079891
(87) Internationale Veröffentlichungsnummer: WO 2023/072994

(56) Entgegenhaltungen:
- EP-A1- 2 506 027
- US-A1- 2014 232 867

## Beschreibung

Die Erfindung betrifft ein Verfahren, eine Vorrichtung und ein Computerprogramm zur Lagebestimmung eines um eine Drehachse drehenden Satelliten zumindest mittels eines optischen Sternsensors mit einem zur Drehachse in einem vorgegebenen Winkel fest angeordneten optischen Achse auf ein erfasstes Lichtobjektfeld ausgerichteten Lichtsensor mit einer mit einem Sensorkoordinatensystem versehenen Sensorfläche mit einer zeilenweisen Anordnung von lichtempfindlichen Pixeln.

Die Erfindung baut auf dem Stand der Technik der Jena-Optronik ASTRO-Sternsensor Baureihe auf. Diese Sternsensoren wie ASTRO CL, ASTRO APS und dessen Weiterentwicklung ASTRO APS3 werden im klassischen Applikationsbereich wie beispielsweise LEO-, GEO- und wissenschaftlichen Satelliten eingesetzt. Aus der Druckschrift DE 10 2020 122 748 B3 ist ein Verfahren, eine Vorrichtung und ein Computerprogrammprodukt zur Lagebestimmung eines Raumflugkörpers im Weltraum mittels eines Sternsensors bekannt.

Den oben genannten Sternsensoren liegt aufgrund ihrer Arbeitsweise eine natürliche Limitierung bezüglich der Drehratentoleranz zugrunde. Dies begründet sich in der realisierbaren Optiköffnung und damit der verfügbaren Lichtmenge und der entsprechend kleinen Belichtungszeit, um ein möglichst punktförmiges Sternabbild von einzelnen Lichtobjekten zu erhalten. Damit können bei hohen Drehraten nur noch sehr helle Sterne verarbeitet werden, was zu einer erheblichen Einschränkung des von dem Sternsensor erfassten Lichtobjektfeldes wie beispielsweise Sternfeldes führen kann.

Die Spin-Stabilisierung von um eine Drehachse bevorzugt um deren Längsachse drehenden Satelliten ist eine einfache und ressourcenschonende Methode der Lagestabilisierung eines Satelliten. Bei Bedarf einer dauernden Erdausrichtung ist diese Methode nicht in vorteilhafter Weise bei Erdbeobachtungsmissionen (LEO, MEO, GEO) einsetzbar, jedoch beispielsweise bei Tiefraummissionen, wie zum Beispiel einem Flug zum Mars. Auf dem Flug zum Mars werden die Raumflugkörper beispielsweise bei zwei bis vier Umdrehungen pro Sekunde stabilisiert. Dies entspricht einem Drehratenbereich von ca. 12 bis 24 deg/sec.

Aus dem Dokument EP 2 506 027 A1 ist ein Verfahren bekannt zum Betrieb eines Sternsensors mit einem optischen Abbildungssystem. Das Abbildungssystem weist eine Optik auf, die ein um eine optische Achse vorgegebenes Sichtfeld auf eine Sensorfläche eines Detektors entlang eines Strahlengangs abbildet. Die Optik weist ein in Form eines zentralen Objektivs mit einer ersten Brennweite ausgebildetes Teilobjektiv und ein in Form eines dieses umgebenden Spiegellinsenobjektivs ausgebildetes Teilobjektiv mit größerer Brennweite mit gleichzeitig auf die Sensorfläche abbildenden und mittels einer Recheneinrichtung zumindest teilweise voneinander getrennten Lichtmustern auf. Von dem Detektor erfasste Lichtmuster beider Teilobjektive werden mittels einer Recheneinrichtung voneinander getrennt.

Aus dem Dokument US 2014/0232867 A1 ist ein Verfahren bekannt zum Bestimmen einer Lage eines Sternsensors auf der Grundlage einer Rolling-Shutter-Abbildung, das die folgenden Schritte umfasst: S1: Optimieren einer Beziehung zwischen einer Belichtungszeit *t_{Int},* einer Zeilenauslesezeit *t_{rg},* einer ZwischenzeilenIntegralintervallzeit *tᵣᵢ* und einer Bildverarbeitungszeit *t_{Fp}* eines Bildes für die Rolling-Shutter-Abbildung unter Verwendung eines Rolling-Shutter-Modells eines Bildsensors in dem Sternsensor auf der Grundlage einer Zeile; S2: Vorhersage und Extraktion von Positionen von M Navigationssternen, die in einer Sternkarte in dem Sternsensor enthalten sind, gemäß der optimierten Beziehung zwischen der Belichtungszeit*t_{Int}*, der Zeilenauslesezeit *t_{rd},* der Zwischenzeilenintegralintervallzeit *tᵣᵢ* und der Bildverarbeitungszeit *t_{Fp},* wobei die Position jedes Navigationssterns verwendet wird, um eine Zeilennummer jedes Navigationssterns in dem Sternsensor zu bestimmen; und S3: Aktualisieren einer Lagematrix und einer Winkelgeschwindigkeit des Sternsensors gemäß den Positionen der Navigationssterne und basierend auf einer Einzelstern-Rekursions-Lageschätzung der Rolling-Shutter-Abbildung, wann immer die Position eines Navigationssterns extrahiert wird, Anwenden der Lagematrix des Sternsensors auf eine Berechnung der Lagematrix eines nächsten Navigationssterns durch Rekursion, um eine wiederkehrende Lagematrix des Sternsensors zu erhalten, Verschmelzen der Position des nächsten Navigationssterns und der wiederkehrenden Lagematrix des Sternsensors, um eine aktualisierte Lagematrix und eine aktualisierte Winkelgeschwindigkeit des Sternsensors zu bilden, und sequentielles Übertragen der aktualisierten Lagematrix und der aktualisierten Winkelgeschwindigkeit des Sternsensors, bis eine endgültige Lagematrix und eine endgültige Winkelgeschwindigkeit des Sternsensors erhalten werden.

Die zu lösende Aufgabe besteht darin, mit konventionellen Sternsensoren die inertiale Lagebestimmung bei spin-stabilisierten Satelliten zu verbessern.

Die Aufgabe wird durch Gegenstände der Ansprüche 1, 7, 8 gelöst. Die von den Ansprüchen 1, 7, 8 abhängigen Ansprüche geben vorteilhafte Ausführungsformen der Gegenstände der Ansprüche 1, 7, 8 wieder.

Die Aufgabe wird durch ein Verfahren mit Merkmalen der nachfolgenden Beschreibung zur Lagebestimmung eines um eine Drehachse drehenden Satelliten zumindest mittels eines optischen Sternsensors gelöst. Hierzu ist zumindest ein optischer Sternsensor bezüglich seiner optischen Achse gegenüber der Drehachse in einem vorgegebenen Winkel, bevorzugt einem rechten Winkel, fest an dem Satelliten, beispielsweise einer gemeinsamen Träger- oder Rahmenstruktur befestigt. Zur Erhöhung der Messgenauigkeit der Lage des Satelliten und dessen Lageregelung können bei tolerierbarer Masse weitere Sternsensoren und/oder andere, nicht optische, die Lage des Satelliten erfassende Sensoren, beispielsweise Gyrosensoren und/oder dergleichen vorgesehen sein und entsprechend ausgewertet werden. Das Verfahren zur inertialen Lagebestimmung ausgelegt sein. Verfahren kann zur inertialen Lagebestimmung von spin-stabilisierten Satelliten mit einem konventionellen Sternsensor ausgelegt sein.

Der Sternsensor kann ein Lichtobjektfeld erfassen. Der Sternsensor kann ein Lichtobjektfeld im Weltraum erfassen. Das Lichtobjektfeld kann Lichtobjekte umfassen. Die Lichtobjekte können selbstleuchtend sein. Die Lichtobjekte können im Wesentlichen konstant leuchten. Die Lichtobjekte können Sterne sein. Die Sterne können in einem Sternhaufen oder Sternfeld angeordnet sein. Der Sternsensor kann den Lichtsensor umfassen. Der Sternsensor kann eine Mehrzahl von optischen Elementen, beispielsweise optische Linsen, Blenden, Filter, wie beispielsweise ein Streulichtfilter und/oder dergleichen aufweisen. Die optischen Elemente können ein optisches System bilden. Das optische System kann dazu ausgelegt sein, eine Abbildung auf dem Lichtsensor zu erzeugen. Das optische System kann eine feste oder variable Brennweite und/oder optische Öffnung aufweisen. Das optische System kann eine feste oder einstellbare Brennweite und/oder optische Öffnung aufweisen. Der Sternsensor kann eine Sternsensorachse aufweisen. Die optischen Elemente und der Lichtsensor können entlang der Sternsensorachse angeordnet sein. Der Lichtsensor kann als Flächensensor mit einer Sensorfläche ausgeführt sein. Die Sensorfläche kann plan, eben und/oder viereckig, insbesondere quadratisch, sein. Der Lichtsensor kann mit seiner Sensorfläche senkrecht zur Sternsensorachse angeordnet sein. Die Sternsensorachse kann die optische Achse bilden und/oder als optische Achse bezeichnet werden. Der Lichtsensor kann eine Mehrzahl lichtempfindlicher Sensorelemente aufweisen. Die Sensorelemente können matrixförmig in Zeilen und/oder Spalten angeordnet sein. Die Sensorelemente können Pixel bilden und/oder als Pixel bezeichnet werden. Die Sensorfläche kann mithilfe eines Sensorkoordinatensystems beschreibbar sein. Das Sensorkoordinatensystem kann ein kartesisches Koordinatensystem mit einem Koordinatenursprung, einer x-Achse und einer y-Achse sein. Der Koordinatenursprung kann einem an einer Ecke der Sensorfläche angeordneten Sensorelementen zugeordnet sein. Die Sensorelemente können zeilenweise angeordnet sein. Die Sensorelement-Zeilen können parallel zur x-Achse verlaufen und in y-Richtung über-/untereinander angeordnet sein. Der Lichtsensor kann zum Erfassen von Bilddaten ausgelegt sein. Der Lichtsensor kann zum zeilenweisen Erfassen von Bilddaten ausgelegt sein. Der Lichtsensor kann zum zeilenweise sequentiellen Erfassen von Bilddaten ausgelegt sein. Der Sternsensor kann ein konventioneller Sternsensor sein und/oder als konventioneller Sternsensor bezeichnet werden.

Der Lichtsensor kann einzelne Lichtobjekte, wie beispielsweise Sterne, in einem Sensorkoordinatensystem abbilden. Die aktuelle Lage des Satelliten kann unter Berücksichtigung entsprechender mathematischer Berechnung und Zuordnung zu einem Sternkatalog bestimmt werden. Der Sternkatalog kann in dem Sternsensor und/oder in einer zentralen Steuerung des Satelliten hinterlegt sein. Jeder Aufnahme des Lichtsensors kann eine entsprechende Zeitmarke zugeordnet werden. Die Zuordnung kann in laufend und/oder in Echtzeit erfolgen. Damit können/kann über den Drehwinkel um die Drehachse echtzeitgenau die Lage des Satelliten um seine Drehachse und/oder dessen Lage bezüglich weiterer Raumachsen ermittelt werden.

Zur Verbesserung der Auflösung kann die Sensorfläche des Lichtsensors in einzelnen Zeilen, beispielsweise eine Reihung jeweils eines Pixels in einer Zeile, aufgeteilt werden. Diese Zeilen können sequentiell, das heißt Zeile für Zeile, erfasst und ausgewertet werden. Die Auswertung der linear erfassten Pixel einer Zeile kann in der Weise erfolgen, dass jeder Zeile das erfasste Zeitintervall zugeordnet wird und in Echtzeit eine Faltung in einem Boxcar-Operator erfolgt. Der Boxcar-Operator kann die verrauschten und gegebenenfalls aufgrund der Drehung des Satelliten auf mehrere Pixel einer Zeile verschmierten Signale bearbeiten. Hierzu kann der Boxcar-Operator entlang eines ausgeschnittenen Intervalls (Box) von Pixeln die Pixelwerte der einzelnen Pixel summieren, beispielsweise in einer Dreiecksfunktion ein Lichtmaximum bilden und/oder dieses einer Position in dem Lichtsensor zuordnen. Hierzu kann beispielsweise das Lichtmaximum anhand einer Lage der Zeile und innerhalb der Zeile im Sensorkoordinatensystem einer Position eines Lichtobjekts zugeordnet werden.

Auf diese Weise kann für jede Zeile geprüft werden, ob sich ein Lichtmaximum und damit ein Lichtobjekt ergibt. Über das gesamte Sensorkoordinatensystem wird daraus ein Bild mit einer aus einer Mehrzahl von Lichtobjekten gebildeten Objektliste enthaltend Lichtobjektkoordinaten, Lichtmaximum und Messzeitpunkt ermittelt.

Diese Objektliste kann mit einem hinterlegten Sternkatalog verglichen und daraus die Lage des Satelliten zum aktuellen Zeitpunkt ermittelt werden. Alternativ kann die Lage des Satelliten ermittelt werden indem aus der Objektliste eine Sternidentifikation und eine Lageberechnung der Lichtobjekte mittels eines sterngruppen-kodierten Sternkatalogs erfolgt, wie dies beispielsweise in der Druckschrift DE 10 2020 122 748 B3 vorgeschlagen wird.

Eine Auswertung der lichtempfindlichen Pixel kann anhand der Binning-Technik erfolgen. Dabei können zumindest zwei Zeilen, bevorzugt zwei, drei oder vier Zeilen zur Erfassung desselben Lichtmaximums (2x2, 3x3, oder 4x4 Binning) ausgewertet werden. Die Realisierung der Binning Technik kann bereits hardwareseitig auf dem Lichtsensor und/oder nachgeordnet in einer Software zur Auswertung der Zeilen erfolgen.

Das von dem Sternsensor erfassbare physische Lichtobjektfeld kann bei bekannter Drehrate des Satelliten um die Drehachse virtuell erweitert werden. Hierzu kann eine Position eines oder mehrerer aus dem Lichtobjektfeld ausgedrehter Lichtobjekte anhand der Drehrate des Satelliten berechnet werden, wie beispielsweise durch eine Extrapolation einer zuletzt bekannten Position und der aktuellen Drehrate des Satelliten. Auf diese Weise kann beispielsweise die Lage des Satelliten bei einem Bild mit einer begrenzten Anzahl von Lichtobjekten mit höherer Signifikanz anhand des Sternkatalogs zugeordnet werden.

Insbesondere bei einer Ausrichtung der linear verzogenen Lichtpunkte von nebeneinander liegenden Pixeln über mehrere Zeilen, die beispielsweise infolge einer Verdrehung des Satelliten außerhalb der Drehachse und bei nicht orthogonaler Anordnung der Drehachse und der optischen Achse auftreten kann, kann vorgesehen sein, dass vor Anwendung des Boxcar-Operators mittels digitaler Bildverarbeitung eine lineare Anordnung der Lichtsignale eines Lichtobjekts entlang einer linearen Arbeitsrichtung des Boxcar-Operators erfolgt.

Das Verfahren kann als zu- und abschaltbare Routine zu einer konventionellen Lageerfassung des Satelliten mittels eines Sternsensors vorgesehen werden. Beispielsweise kann der Sternsensor ohne das vorgeschlagene Verfahren und in einer 3-Achsen Lagestabilisierung betrieben werden, wenn der Satellit eine Umlaufbahn eines Massekörpers wie beispielsweise eines Planeten, insbesondere des Mars erreicht.

Das Verfahren kann zur inertialen Lagebestimmung von spin-stabilisierten Satelliten mit einem konventionellen Sternsensor ausgelegt sein. Folgende Schritte können ausgeführt werden: sequentiell zeilenweises Einlaufen von Bilddaten; Faltung der einlaufenden Bilddaten von z.B. Zeile #n (11) von to bis t2 mit einem angepassten (z. B. 30 Pixel breit) Boxcar-Operator in einer Echtzeit-Bildverarbeitung, beispielsweise realisiert mit FPGA-, ASIC- oder Prozessor-basierter Datenverarbeitung im Sternsensor; der angepasste Boxcar-Operator summiert pixelweise das einlaufende verrauschte Sternspursignal zu einer Dreiecksfunktion mit dem Maximum von beispielsweise 210 ADC counts auf (gemäß Ausführungsbeispiel 4.5mag, 1.6ms, 7 ADC counts); das Rauschen des Sternspursignals wird entsprechend reduziert; das Maximum des gefalteten Signals markiert die Sternposition (x, y) eines Sterns in Zeile #n in einem Detektor Koordinatensystem; über das gesamte Bild entsteht eine Objektliste bestehend aus Sternkoordinaten, dem Maximum-Signal und dem Messzeitpunkt und/oder basierend auf der Objektliste erfolgt eine Sternidentifikation und eine Lagerechnung nach der mit der deutschen Patentanmeldung Nr. 10 2020 122 748.5 am 31.08.2020 angemeldeten Erfindung mit Hilfe eines angepassten sterngruppen-kodierten Sternkatalogs.

Eine Reduzierung einer Detektorauflösung kann durch beispielsweise 2x2 oder 4x4 Binning zu einer Verbesserung eines radiometrischen Signalbudgets (größeres SNR) führen, sodass dunklere Sterne verarbeitet werden können, was zu einer höheren Verfügbarkeit (Coverage) des Sternsensors bei reduzierter Genauigkeit führen kann. Bei bekannter Drehrate kann das physische Sternsensor-Gesichtsfeld virtuell erweitert werden, indem eine Sternposition herausgelaufener Sterne mit Hilfe einer Drehrate berechnet wird. Das Verfahren kann eine durch eine fixe Spin-Achse und den dazu fix ausgerichteten Sternsensor, streifenförmige Sternabbildung entlang einer Zeile vorteilhaft ausnutzen. Die Spin-Achse kann auch als Drehachse bezeichnet werden. Die Ausrichtungen von Spin-Achse und Sternsensor kann beliebig sein, was mithin zu Sternspuren in beliebiger Richtung auf dem Detektor führen kann. Vor einer Anwendung des Boxcar-Operators kann eine Bilddatendrehung mittels digitaler Bildverarbeitung vorausgehen. Das Verfahren kann im Sternsensor derart implementiert wird, dass es zu- und abschaltbar zu einer konventionellen Datenverarbeitung betrieben werden kann. Der Sternsensor kann in seiner konventionellen Betriebsweise weiter operationell verwendet werden, wenn der Satellit die Marsumlaufbahn erreicht und in eine 3-Achsen Lagestabilisierung übergeht.

Mit anderen Worten ist beispielsweise anhand einer vorteilhaft ausgeführten Ausführungsform Kern der Erfindung die vorteilhafte Ausnutzung des zeilenweisen Auslesens und des zeilenweisen Prozessierens der Bildinformation von Matrix-Bildsensoren, beispielsweise eines Lichtsensors mit 1024x1024 Pixeln wie beispielsweise CMOS APS, CCD und/oder dergleichen. Im Gegensatz zu konventionellen Belichtungszeiten von Sternsensoren wird die Belichtungszeit beispielsweise bei einer Auslesefrequenz von ca. 4 Hz auf 40 bis 50 ms verlängert, so dass entlang der Zeilen des Lichtsensors die Lichtintensität eines Lichtobjekts in einer Spur über mehrere Pixel linear verteilt wird. Beispielsweise kann ein durch die Optik des Sternsensors vorgegebenes Gesichtsfeld wie Lichtobjektfeld 20 deg betragen, so dass sich bei einer Gesamtbelichtungszeit von 40 bis 50 ms eine Belichtungszeit (pixel dwell time) von ca. 1,6 ms beziehungsweise 0,02 deg pro Pixel ergibt. Bei dieser Belichtungszeit ergibt sich für ein Lichtobjekt eine Verteilung des Lichts über ca. 30 Pixel einer Zeile, so dass die Verarbeitung des Boxcar-Operators auf 30 Pixel begrenzt werden kann. Bei einer Helligkeit eines Lichtobjekts von beispielsweise 4,5 mag werden pro Pixel beispielsweise 7 Zähler an dem AD-Converters (ADC Counts) erzeugt.

In bevorzugter Weise und ohne Abweichungen der Spur eines Lichtobjekts aus einer Zeile zu riskieren wird der Sternsensor entsprechend zur Drehachse wie Spin-Achse des Satelliten orthogonal ausgerichtet. Die Zeilen des Lichtsensors im Sternsensor stehen dabei ebenfalls orthogonal zur Drehachse.

Das entlang einer Zeile linear verteilte Licht eines Lichtobjekts wird mit einem angepassten Boxcar-Operator in Echtzeit des Pixeldatenstroms im mathematischen Sinne gefaltet. Der Boxcar-Operator entspricht im Wesentlichen der Länge der Spur eines Lichtobjekts in Pixeleinheiten. Diese Länge ist durch die bekannte Drehrate und die angewandte Belichtungszeit bekannt. Die Auswertung der Faltungsoperation im Boxcar-Operator ergibt beispielsweise eine Dreiecksfunktion mit über die Zeile ansteigender und absteigender Lichtintensität und einem Lichtmaximum, welches den Schwerpunkt des Lichtobjekts repräsentiert.

Das Ergebnis, nämlich Schwerpunkt, Maxsignal und Systemzeitpunkt, wird in einer Recheneinheit des Sternsensors gespeichert und über alle weiteren auf diese Weise prozessierten Lichtobjekte zur Lageberechnung verwendet. Die Lageberechnung erfolgt über eine Sternidentifikation und die Quaternion-Methode beispielsweise entsprechend der Druckschrift 10 2020 122 748 B3. Beispielsweise wird eine systemangepasste Sterngruppenkatalogkodierung eingesetzt.

Zur Unterdrückung von störenden Strahlungsereignissen kann beispielsweise ein Sternsensor entsprechend einem "Stellar Gyro", das ein optisches Sensorsystem für Ausrichtung und Drehraten von Raumflugkörpern darstellt, angewendet werden. Das als "Stellar Gyro" bezeichnete optische Sensorsystem weist beispielsweise folgende Eigenschaften auf: Es sind eine oder mehrere Bildverarbeitungseinheiten (Electronic Unit mit Prozessor) und mehrere auf unterschiedlichen optischen Achsen angeordnete Sternsensoren mit unterschiedlicher Ausrichtung auf dem Satelliten mit einem Ausrichtungswinkel der optischen Achsen zueinander beispielsweise >60 deg, bevorzugt mit orthogonaler Anordnung vorgesehen. Dadurch wird das Blendungsproblem einzelner Sternsensoren und die geringere Genauigkeit entlang der jeweiligen optischen Achse (Line of Sight) verringert. Weiterhin kann ein Datenverarbeitungsprogramm zum Erkennen und Herausrechnen von Störungen in den Bilddaten der Sternsensoren (wie z.B. verursacht durch Solar Flares), welches auf einem oder mehreren Prozessoren läuft, eingesetzt werden. Alternativ oder zusätzlich kann ein Datenverarbeitungsprogramm zur Quasi-Echtzeit- Berechnung der Lage (Ausrichtung) und Drehraten der Sternsensoren aus den vorverarbeiteten Bilddaten, welches ebenfalls auf einer oder mehreren Bildverarbeitungseinheiten nachgeschaltet zum vorgenannten Datenverarbeitungsprogramm läuft, vorgesehen sein. Auf Drehratensensoren kann bei dieser Lösung verzichtet werden. Die Kombination dieser Merkmale führt zu einem optischen Sensorsystem mit sehr hoher Verfügbarkeit auch im Falle von Blendungen eines oder einer Teilmenge der vorhandenen beispielsweise fünf Sternsensoren und auch bei hohen Drehraten, bei denen die Sternobjekte zumindest in einigen Bildabschnitten strichförmig verschmieren. Dabei sind unterschiedlich komplexe Systemarchitekturen wählbar, die je nach Orbit und Dynamikanforderungen sowie Redundanzanforderungen zur Erreichung von Zuverlässigkeits- und Verfügbarkeitsvorgaben eingesetzt werden.

Die Aufgabe wird zudem von einer Vorrichtung zur Durchführung des vorgeschlagenen Verfahrens gelöst. Hierzu kann zumindest ein auf einem Satelliten in einem bezüglich seiner optischen Achse vorgegebenen Winkel zu dessen Drehachse fest angeordneter Sternsensor mit einem Lichtsensor wie beispielsweise einem Matrixsensor mit einem in Zeilen untereinander angeordneten lichtsensitiven Lichtpunkten wie Pixeln vorgesehen sein. Dem Lichtsensor kann in Richtung eines Lichtobjektfelds, wie Sternfeld, eine Optik zur Einstellung einer vorgegebenen oder vorgebbaren Brennweite vorgeschaltet sein. Der Sternsensor enthält eine Auswerteeinheit, die dazu ausgelegt sein kann Lichtsignale der Pixel als Bilddaten zu erfassen und auszuwerten. Die Auswerteeinheit kann wenigstens einen Prozessor, wenigstens einen Arbeitsspeicher, wenigstens einen Datenspeicher und/oder wenigstens eine Signalschnittstelle aufweisen. Die Auswerteeinheit kann strukturell und/oder funktionell verteilt angeordnet sein. Die Vorrichtung kann von dem Satelliten strukturell und/oder funktionell gesondert ausgeführt sein. Vorrichtung kann teilweise oder vollständig strukturell und/oder funktionell in den Satelliten integriert sein. Insofern kann die Vorrichtung auch ein Satellit oder ein Modul eines Satelliten sein.

Das Computerprogramm oder die Programmcodeabschnitte kann/können als Computerprogrammprodukt vorliegen. Das Computerprogramm oder die Programmcodeabschnitte kann/können auf einem Datenspeicher oder Datenträger als herunterladbare, installierbare und/oder ausführbare Programmdatei vorliegen. Das Computerprogramm oder die Programmcodeabschnitte kann/können dazu ausgelegt sein, in einen Arbeitsspeicher geladen und/oder mithilfe wenigstens eines Prozessors ausgeführt zu werden. Das Computerprogramm oder die Programmcodeabschnitte kann/können in einem Speicher der Auswerteeinheit mit zumindest einer Softwareroutine zur Durchführung des vorgeschlagenen Verfahrens abgespeichert sein, die stetig oder bei Bedarf aufgerufen und abgearbeitet wird. Insoweit dient das Computerprogramm an sich der Lösung der gestellten Aufgabe. Das Computerprogramm kann auf einer Vorrichtung mit zumindest einem Sternsensor installierbar und/oder ausführbar sein.

Die Erfindung wird anhand der in den Figuren 1 bis 5 dargestellten Ausführungsbeispiele näher erläutert. Hierbei zeigen:
- Figur 1: einen Satelliten mit einem Sternsensor in schematischer Darstellung,
- Figur 2: die Sensoroberfläche eines Lichtsensors des Sternsensors der Figur 1 in schematischer Darstellung,
- Figur 3: ein Diagramm mit der schematischen Darstellung von Lichtsignalen des Lichtsensors der Figur 1 mittels eines Boxcar-Operators,
- Figur 4: ein Blockschaltbild eines Sternsensors und
- Figur 5: ein Ablaufdiagramm zur Lageberechnung des Satelliten der Figur 1 mittels des Sternsensors der Figur 1.

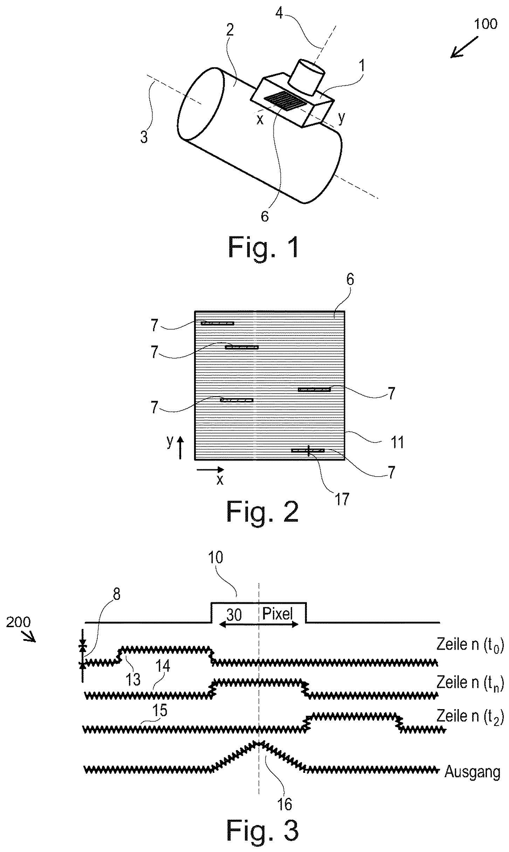

Die Figur 1 zeigt den Satelliten 100 mit seiner Außenstruktur 2. Der Satellit 100 ist um die Drehachse 3 spin-stabilisiert und dreht um die Drehachse 3 mit einer vorgegebenen Drehrate. Auf dem Satelliten 100 ist der Sternsensor 1 mit seiner optischen Achse 4 orthogonal befestigt und erfasst Bilddaten eines durch dessen Optik vorgegebenen Lichtobjektivfelds wie Sternfelds. Der Lichtsensor 6 weist eine zeilenförmige Anordnung von Pixeln auf, wobei die Zeilen jeweils in x-Richtung des Lichtsensors 6 und damit tangential entlang der Drehachse 3 ausgerichtet sind. Die Zeilen sind in y-Richtung angeordnet.

Die Figur 2 zeigt den Lichtsensor 6 in schematischer Ansicht mit einer Vielzahl von in x-Richtung angeordneten Zeilen 11, in denen jeweils eine Vielzahl von lichtsensitiven Pixeln angeordnet ist. Die Zeilen 11 sind parallel in y-Richtung angeordnet. Aufgrund des Verhältnisses zwischen Drehrate des Satelliten 100 und der Belichtungszeit des Lichtsensors 6 verwischen die Lichtintensitäten eines Lichtobjekts wie beispielsweise eines Sterns zu den Spuren 7, wobei die exakte Position des Lichtobjekts durch das Lichtmaximum 17 festgelegt ist.

Die Figur 3 zeigt unter Bezug auf die Figur 2 das Diagramm 200 mit der Auswertung eines Lichtsignals 8 einer Zeile 11 der Figur 2 als Zeile n. Von der hier gezeigten Zeile n werden über die Zeitpunkte t₀, tₙ, t₂ die Bilddaten 13, 14, 15 gefaltet und der Boxcar-Operator 10 angewendet. Der Boxcar-Operator 10 weist in dem gezeigten Ausführungsbeispiel die Breite von 30 Pixeln auf, was dem Verhältnis der Drehrate des Satelliten 100 (Figur 1) zu der Belichtungszeit des Lichtsensors 6 (Figur 1) entspricht. Die Behandlung der jeweils gefalteten Zeilen 11 des Lichtsensors 6 erfolgt in dem Prozessor 16 das Lichtmaximum der Spuren 7, die der exakten Position des in dieser Zeile erfassten Lichtobjekts zu der ebenfalls erfassten Zeit entsprechen. Auf diese Weise wird über alle Zeilen 11 eine Objektliste mit Zuordnung der Belichtungszeit, des Lichtmaximums und der zugehörigen Position erstellt, die der Lageregelung des Satelliten zugeführt werden kann. Die Behandlung der Bilddaten 13, 14, 15 mittels des Boxcar-Operators führt zu einer signifikanten Verringerung des Rauschens.

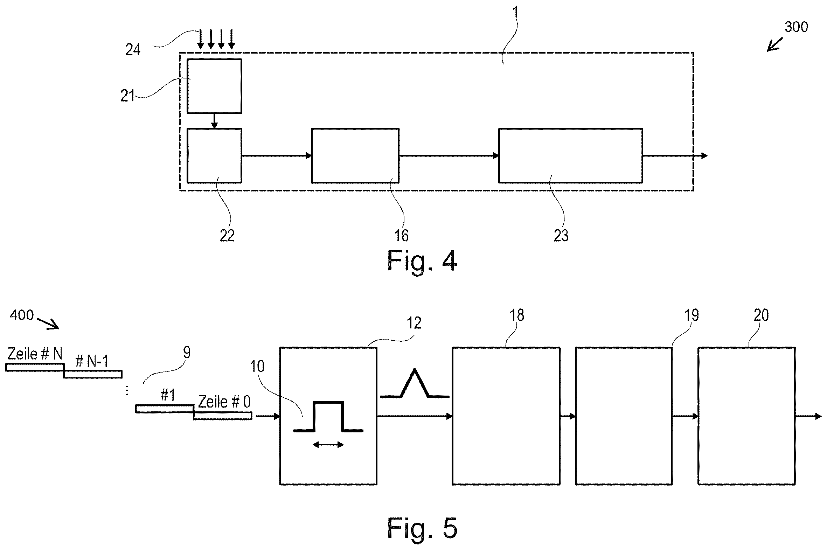

Die Figur 4 zeigt das Blockschaltbild 300 des Sternsensors 1. Die Lichteinstrahlung 24 beispielsweise von Sternlicht wird über die Optik 21 auf den Detektor 22 mit dem Lichtsensor 6 (Figur 1) eingestrahlt. Der Prozessor 16 erfasst die eingestrahlten Bilddaten und steuert den Detektor 22. In der im Prozessor implementierten Recheneinheit 23 wie Auswerteeinheit sind die Routinen zur Berechnung und Auswertung, unter anderem das Computerprogramm zur Durchführung des Boxcar-Operators, gespeichert. Die von dem Prozessor ermittelte Lage des Satelliten wird der Lageregelung des Satelliten 100 (Figur 1) zugeführt.

Die Figur 5 zeigt das Ablaufdiagramm 400 zur Ermittlung der Lage des Satelliten 100 der Figur 1. Die Datenerfassung 9 des Sternsensors 1 (Figur 4) erfasst sequentiell die einzelnen Zeilen #N, #N-1, #1, #0 des Lichtsensors 6 (Figur 1) und führt diese der Echtzeit-Bildbearbeitung 12 zu. In dieser werden die Zeilen jeweils in einer Faltung über die Zeit dem Boxcar-Operator 10 zugeführt. Die Auswertung der der erfassten Zeilen erfolgt in dem Boxcar-Operator beispielsweise entsprechend einer Funktion f(ω, ti), Dabei ergibt sich die Breite des Boxcar-Operators 10 beispielsweise in Form von 30 Pixeln aus der Drehrate ω des Satelliten um die Drehachse d und die Integrationszeit ti des Lichtsensors. Die Funktionalität des Boxcar-Operators 10 kann sowohl in Hardware als auch in Software umgesetzt werden. In der Hardware des Lichtsensors kann dieser infolge der zeilenweisen Bearbeitung der Lichtsignale vorteilhaft umgesetzt werden. In einer Umsetzung des Boxcar-Operators 10 in einer entsprechenden Software erfolgt dies abhängig von einer möglichen Datendurchsatzes des Prozessors.

In dem Boxcar-Operator 10 wird das zeitabhängige Lichtmaximum jeweils einer Zeile gebildet und in die Sammeleinrichtung 18 übertragen. Dort wird aus der Information des Zeitpunkts, der Signalintensität und der Position des berechneten Lichtmaximums jeder einzelnen Zeile eine Objektliste aller erfasster Lichtobjekte erstellt. In der Sternidentifikation 19 werden beispielsweise mittels eines Sternkatalogs einzelne Sterne oder angepasste Sterngruppen identifiziert und der Lageberechnung 20 zugeführt. In der Lageberechnung 20 erfolgt aus den identifizierten Sternen oder Sterngruppen die Lageberechnung beispielsweise anhand der Quaternion-Methode und der Drehrate des Satelliten.

### Bezugszeichenliste

- 1: Sternsensor
- 2: Außenstruktur
- 3: Drehachse
- 4: optische Achse
- 6: Lichtsensor
- 7: Spur
- 8: Lichtsignal
- 9: Datenerfassung
- 10: Boxcar-Operator
- 11: Zeile
- 12: Echtzeit-Bildbearbeitung
- 13: Bilddaten
- 14: Bilddaten
- 15: Bilddaten
- 16: Prozessor
- 17: Lichtmaximum
- 18: Sammeleinrichtung
- 19: Sternidentifikation
- 20: Lageberechnung
- 21: Optik
- 22: Detektor
- 23: Recheneinheit
- 24: Lichteinstrahlung
- 100: Satellit
- 200: Diagramm
- 300: Blockschaltbild
- 400: Ablaufdiagramm

## Patentansprüche

1. Verfahren zur Lagebestimmung eines um eine Drehachse (3) drehenden Satelliten (100) zumindest mittels eines entlang einer optischen Achse (4) auf ein zu erfassendes Lichtobjektfeld ausgerichteten Sternsensors (1), wobei Drehachse (3) und optische Achse (4) in einem festen Winkel zueinander angeordnet sind und ein Lichtsensor (6) mit einer senkrecht zu der optischen Achse (4) angeordneten Sensorfläche vorgesehen ist, **dadurch gekennzeichnet, dass**
- Bilddaten (13, 14, 15) des Lichtsensors (6) zeilenweise und sequentiell erfasst werden,
- die Bilddaten (13, 14, 15) jeweils einer Zeile (11) über ein vorgegebenes Zeitintervall mittels eines Boxcar-Operators (10) mit einer vorgegebenen Anzahl von Pixeln gefaltet werden,
- mittels des Boxcar-Operators (10) ein Lichtmaximum ermittelt wird,
- das Lichtmaximum anhand einer Lage der Zeile (11) und innerhalb der Zeile in einem Sensorkoordinatensystem einer Position eines Lichtobjekts zugeordnet wird,
- über ein über das gesamte Sensorkoordinatensystem erfasstes Bild aus einer Mehrzahl von Lichtobjekten eine Objektliste enthaltend Lichtobjektkoordinaten, Lichtmaximum und Messzeitpunkt ermittelt wird.

2. Verfahren nach Anspruch 1, **dadurch gekennzeichnet, dass** aus der Objektliste eine Sternidentifikation und eine Lageberechnung der Lichtobjekte mittels eines sterngruppen-kodierten Sternkatalogs erfolgt.

3. Verfahren nach Anspruch 1 oder 2, **dadurch gekennzeichnet, dass** eine Auswertung der lichtempfindlichen Pixel anhand der Binning-Technik erfolgt, wobei zumindest zwei Zeilen zur Erfassung desselben Lichtmaximums ausgewertet werden.

4. Verfahren nach wenigstens einem der vorhergehenden Ansprüche, **dadurch gekennzeichnet, dass** bei einer bekannten Drehrate des Satelliten (100) um seine Drehachse (3) das physische Lichtobjektfeld virtuell erweitert wird, indem eine Position eines aus dem Lichtobjektfeld ausgedrehten Lichtobjekts mit Hilfe der Drehrate berechnet wird.

5. Verfahren nach wenigstens einem der vorhergehenden Ansprüche, **dadurch gekennzeichnet, dass** außerhalb einer Zeile (11) linienförmig erstreckte Lichtpunkte vor der Anwendung des Boxcar-Operators (10) mittels digitaler Bildverarbeitung in eine lineare Arbeitsrichtung des Boxcar-Operators (10) gebracht werden.

6. Verfahren nach wenigstens einem der vorhergehenden Ansprüche, **dadurch gekennzeichnet, dass** der Sternsensor (1) bis zum Erreichen einer Umlaufbahn um einen Zentralkörper gemäß dem Verfahren nach wenigstens einem der Ansprüche 1 bis 5 und nach Erreichen einer Umlaufbahn um einen Zentralkörper in einer 3-Achsen Lagestabilisierung betrieben wird.

7. Vorrichtung mit zumindest einem Sternsensor (1), welcher bezogen auf eine optische, auf ein Lichtobjektfeld ausgerichtete Achse (4) in einem vorgegebenen, bevorzugt orthogonalen, Winkel gegenüber einer Drehachse (3) eines Satelliten (100) fest angeordnet ist mit einem Lichtsensor (6), dessen Pixel in untereinander angeordneten parallelen Zeilen angeordnet sind und einer Auswerteeinheit zur Auswertung der erfassten Bilddaten (13, 14, 15) des Lichtsensors (6) zur Durchführung des Verfahrens gemäß wenigstens einem der Ansprüche 1 bis 6.

8. Computerprogramm, **dadurch gekennzeichnet, dass** das Computerprogramm Programmcodeabschnitte umfasst, mit denen ein Verfahren nach wenigstens einem der Ansprüche 1 bis 6 ausführbar ist, wenn das Computerprogramm auf einer Vorrichtung nach Anspruch 7 ausgeführt wird.

## Claims

1. Method for determining the position of a satellite (100) rotating about an axis of rotation (3) at least by means of a star sensor (1) aligned along an optical axis (4) with a light object field to be detected, wherein the axis of rotation (3) and the optical axis (4) are arranged at a fixed angle to each other and a light sensor (6) with a sensor surface arranged perpendicular to the optical axis (4) is provided , **characterized in that**
- image data (13, 14, 15) of the light sensor (6) are recorded line by line and sequentially,
- the image data (13, 14, 15) of each line (11) are convolved over a predetermined time interval by means of a boxcar operator (10) with a predetermined number of pixels,
- a light maximum is determined by means of the boxcar operator (10),
- the light maximum is assigned to a position of a light object on the basis of a location of the line (11) and within the line in a sensor coordinate system,
- an object list containing light object coordinates, light maximum, and measurement time is determined from an image of a plurality of light objects captured over the entire sensor coordinate system.

2. Method according to claim 1, **characterized in that** a star identification and a position calculation of the light objects are performed from the object list by means of a star group-coded star catalog.

3. Method according to claim1 or 2, **characterized in that** the light-sensitive pixels are evaluated using the binning technique, wherein at least two lines are evaluated to detect the same light maximum.

4. Method according to at least one of the preceding claims, **characterized in that**, with a known rotation rate of the satellite (100) around about its axis of rotation (3), the physical light object field is virtually expanded by calculating a position of a light object rotated out of the light object field with the aid of the rotation rate.

5. Method according to at least one of the preceding claims, **characterized in that** outside a line (11), light points extending in a line are brought into a linear working direction of the boxcar operator (10) by means of digital image processing before the boxcar operator (10) is applied.

6. Method according to at least one of the preceding claims, **characterized in that** the star sensor (1) is operated until it reaches an orbit around a central body in accordance with the method according to at least one of claims 1 to 5 and, after reaching an orbit around a central body, in a 3-axis position stabilization.

7. Device with at least one star sensor (1) which, relative to an optical axis (4) aligned with a light object field, is fixed at a predetermined, preferably orthogonal angle to an axis of rotation (3) of a satellite (100) and has a light sensor (6) whose pixels are arranged in parallel rows arranged one below the other, and an evaluation unit for evaluating the image data (13, 14, 15) detected by the light sensor (6) in order to carry out the method according to at least one of claims 1 to 6.

8. Computer program, **characterized in that** the computer program comprises program code sections with which a method according to at least one of claims 1 to 6 can be executed when the computer program is executed on a device according to claim 7.

## Revendications

1. Procédé pour déterminer la position d'un satellite (100) tournant autour d'un axe de rotation (3) au moins au moyen d'un capteur stellaire (1) aligné le long d'un axe optique (4) sur un champ lumineux à détecter, l'axe de rotation (3) et l'axe optique (4) étant disposés selon un angle fixe l'un par rapport à l'autre et un capteur de lumière (6) avec une surface de détection disposée perpendiculairement à l'axe optique (4) étant prévu , **caractérisé en ce que**
- les données d'image (13, 14, 15) du capteur de lumière (6) sont enregistrées ligne par ligne et de manière séquentielle,
- les données d'image (13, 14, 15) d'une ligne (11) sont repliées à intervalles de temps prédéterminés à l'aide d'un opérateur boxcar (10) avec un nombre prédéterminé de pixels,
- un maximum de lumière est déterminé à l'aide de l'opérateur boxcar (10),
- le maximum de lumière est attribué à une position d'un objet lumineux à l'aide d'une position de la ligne (11) et à l'intérieur de la ligne dans un système de coordonnées du capteur,
- une liste d'objets contenant les coordonnées des objets lumineux, le maximum de lumière et l'instant de mesure est déterminée à partir d'une image enregistrée sur l'ensemble du système de coordonnées du capteur à partir d'une pluralité d'objets lumineux.

2. Procédé selon la revendication 1, **caractérisé en ce qu'**à partir de la liste d'objets, une identification des étoiles et un calcul de la position des objets lumineux sont effectués à l'aide d'un catalogue d'étoiles codé par groupes d'étoiles.

3. Procédé selon la revendication1 ou 2, **caractérisé en ce qu'**une évaluation des pixels photosensibles est effectuée à l'aide de la technique de binning, au moins deux lignes étant évaluées pour détecter le même maximum de lumière.

4. Procédé selon au moins l'une des revendications précédentes, **caractérisé en ce que**, lorsque la vitesse de rotation du satellite (100) autour de son axe de rotation (3) autour d' , est connue, le champ physique d'objets lumineux est élargi virtuellement en calculant, à l'aide de la vitesse de rotation, la position d'un objet lumineux tourné hors du champ d'objets lumineux.

5. Procédé selon au moins l'une des revendications précédentes, **caractérisé en ce que**, à l'extérieur d'une ligne (11), des points lumineux s'étendant de manière linéaire sont amenés dans une direction de travail linéaire de l'opérateur boxcar (10) au moyen d'un traitement d'image numérique avant l'application de l'opérateur boxcar (10).

6. Procédé selon au moins l'une des revendications précédentes, **caractérisé en ce que** le capteur stellaire (1) est actionné jusqu'à ce qu'il atteigne une orbite autour d'un corps central conformément au procédé selon au moins l'une des revendications 1 à 5 et, après avoir atteint une orbite autour d'un corps central, dans une stabilisation de position sur 3 axes.

7. Dispositif comprenant au moins un capteur stellaire (1) qui, par rapport à un axe optique (4) orienté vers un champ d'objets lumineux, est disposé de manière fixe dans un angle prédéfini, de préférence orthogonal, par rapport à un axe de rotation (3) d'un satellite (100), avec un capteur de lumière (6) dont les pixels sont disposés en lignes parallèles superposées, et une unité d'évaluation pour évaluer les données d'image (13, 14, 15) enregistrées du capteur de lumière (6) afin de mettre en œuvre le procédé selon au moins l'une des revendications 1 à 6.

8. Programme informatique, **caractérisé en ce que** le programme informatique comprend des sections de code de programme avec lesquelles un procédé selon au moins l'une des revendications 1 à 6 peut être exécuté lorsque le programme informatique est exécuté sur un dispositif selon la revendication 7.
